# FASCICULE DE BREVET EUROPEEN

(11) **EP 1 726 498 B1**
(45) Date de publication et mention de la délivrance du brevet: **10.09.2008**
(21) Numéro de dépôt: 06290818.1
(22) Date de dépôt: 19.05.2006
(51) Int. Cl.: B60S 1/52, B60S 1/60

(54) **Projecteur comportant un ensemble optique fermé par une vitre et comportant un dispositif de lavage escamotable pour nettoyer plusieurs zones de la vitre**
Leuchtmittel mit einer mittels einer Scheibe geschlossenen und mit einer einziehbaren Waschvorrichtung für mehrere Scheibenzonen ausgerüsteten, optischen Anordnung
Projector with an optical assembly closed by a glass and having a retractable washing device for washing several zones of the glass

(30) Priorité: 27.05.2005 FR 0505407
(43) Date de publication de la demande: 29.11.2006
(73) Titulaire: VALEO VISION, 93012 Bobigny Cedex (FR)
(72) Inventeur: Puibaraud, Antoine, 75019 Paris (FR)

(56) Documents cités:
- EP-A- 0 508 853
- EP-A- 1 099 610
- DE-A1- 4 244 453
- DE-A1- 19 802 628
- DE-A1- 19 822 698
- FR-A- 2 681 031
- US-A1- 2001 030 874

## Description

L'invention concerne un projecteur de véhicule automobile qui comporte une vitre de protection et qui comporte un dispositif de lavage de la surface externe de la vitre de protection.

L'invention concerne plus particulièrement un projecteur, notamment de véhicule automobile, qui comporte :
- un boîtier renfermant au moins un ensemble optique qui comporte une pluralité de sources lumineuses;
- une vitre de protection du boîtier globalement verticale transversale orientée vers l'avant comportant une surface avant externe;
- et un dispositif de lavage de la surface externe de la vitre comportant une rampe portant au moins deux gicleurs aptes à émettre un cône d'aspersion de liquide de lavage ;
   du type dans lequel la rampe est montée mobile par rapport à la surface externe de la vitre selon une course de déploiement qui est sensiblement perpendiculaire à la surface externe de la vitre entre :

- une position escamotée dans laquelle la rampe est reçue dans un logement,
- et une position déployée dans laquelle la rampe fait saillie en avant de la surface externe de la vitre de manière que le cône d'aspersion de chaque gicleur soit apte à asperger une portion associée de la surface externe de la vitre.

On connaît déjà des projecteurs de ce type.

Ainsi, le document EP-A-1.099.610 propose un projecteur qui comporte un boîtier dans lequel sont agencés deux ensembles optiques dont chacun est destiné à émettre un faisceau lumineux principal.

Chaque ensemble optique a une fonction spécifique, par exemple un tel ensemble optique peut être un feu de signalisation apte à émettre un large faisceau lumineux clignotant ou encore un feu de croisement apte à émettre un faisceau lumineux d'éclairage de la route.

Ces deux ensembles optiques sont protégés par une vitre de protection commune.

Chaque ensemble optique comporte une unique source lumineuse telle qu'une ampoule éventuellement associée à un réflecteur. La source lumineuse unique émet un large faisceau de lumière qui passe à travers la vitre de protection en éclairant principalement une zone centrale de la vitre de protection.

Le nettoyage de la surface externe de la vitre est effectué par un dispositif de lavage escamotable.

Ce dispositif de lavage comporte une rampe qui porte deux gicleurs. La rampe est montée coulissante par rapport à la vitre de protection selon une direction perpendiculaire à la surface externe de la vitre de protection entre une position escamotée dans laquelle la rampe est reçue dans un logement agencé dans la carrosserie de manière adjacente à un bord de la vitre de protection, et une position déployée dans laquelle chaque gicleur est apte à asperger ou à arroser une portion de la vitre devant d'un ensemble optique associé.

Ce type de dispositif de lavage est adapté pour nettoyer des vitres qui protègent des ensembles optiques équipés d'une source lumineuse unique. En effet, le gicleur associé à l'ensemble optique asperge globalement la zone centrale éclairée de la vitre avec un cône d'aspersion de liquide de lavage sous pression pour éliminer les impuretés qui obscurcissent la vitre.

Une portion périphérique de cette zone centrale éclairée est nettoyée moins efficacement car elle n'est pas frappée directement par le cône d'aspersion des gicleurs.

On connaît également du document DE 198 02 628 un lave-projecteur dont le vérin traverse la glace du projecteur, et qui vient en affleurement de cette glace au repos. En position sortie, toute la glace du projecteur est arrosée, y compris des zones non utiles dans la formation du faisceau. De même, le document FR 2 681 031 décrit un lave-projecteur comportant une rampe en anneau entourant toute la glace du projecteur, de sorte que toute la glace est arrosée par les gicleurs, même des zones inutiles pour la formation du faisceau lumineux.

Ces types de dispositifs de lavage ne sont pas adaptés pour un ensemble optique qui est équipé d'une pluralité de sources lumineuses telles que des diodes.

Un ensemble optique équipé d'une pluralité de diodes est apte à émettre une pluralité de pinceaux lumineux intenses mais étroits dans des directions sensiblement parallèles. Ces pinceaux lumineux se fondent l'un à l'autre en avant de la vitre de protection de manière à former le faisceau lumineux principal plus large.

Chaque pinceau lumineux éclaire une zone délimitée de la vitre, dite "zone éclairée". Les zones éclairées sont distinctes entre elles et elles sont réparties sensiblement sur toute la surface externe de la vitre.

Or, les gicleurs des dispositifs de lavage connus aspergent une large portion centrale de la surface externe de la vitre qui englobe plusieurs zones éclairées. Cependant, les zones éclairées qui sont agencées à la périphérie de la zone centrale ne sont pas directement nettoyées par le cône d'aspersion de liquide de lavage sous pression, et l'intensité lumineuse du pinceau lumineux émis par ces diodes périphériques est susceptible d'être affaiblie par de la saleté adhérant à la surface externe de la vitre.

Il est possible d'élargir le cône d'aspersion du gicleur pour nettoyer une plus grande portion de la surface externe de la vitre. Cependant, la force d'impact du jet de lavage serait diminuée, ce qui diminuerait l'efficacité du lavage.

De plus, une grande quantité d'eau est alors gaspillée pour laver des portions de vitre qui ne sont pas ou peu éclairées.

Pour résoudre ces problèmes, l'invention propose un projecteur du type décrit précédemment, caractérisé en ce que l'ensemble optique est équipé d'une pluralité de diodes électroluminescentes, en ce qu'il est apte à émettre une pluralité de pinceaux lumineux intenses et étroits définissant sur la vitre de protection des zones éclairées distinctes entre elles, et en ce que la course de déploiement de la rampe est telle que la portion de surface arrosée par le cône d'aspersion de chaque gicleur englobe au moins une zone éclairée de la surface externe de la vitre en vis-à-vis de chaque source lumineuse.

Selon d'autres caractéristiques de l'invention :
- les portions de surfaces arrosées sont sensiblement distinctes les unes des autres ;
- le logement est agencé de manière adjacente à au moins un bord périphérique de la surface externe de la vitre ;
- les gicleurs sont alignés selon une direction perpendiculaire à la course de déploiement sur une face latérale de la rampe ;
- la rampe forme un anneau qui entoure la surface externe de la vitre ;
- le logement est agencé de manière à déboucher dans la surface externe de la vitre ;
- le fond du logement est réalisé venu de matière avec la vitre ;
- le fond du logement est un élément distinct de la vitre ;
- le fond du logement est venu de matière avec le boîtier;
- la vitre est réalisée en deux parties distinctes qui sont agencées de part et d'autre du logement ;
- le logement est étanche ;
- les gicleurs sont alignés selon une direction perpendiculaire à la course de déploiement sur deux faces latérales de la rampe de manière à asperger des portions de la surface externe de la vitre qui sont réparties de part et d'autre du logement ;
- la rampe a un axe principal d'orientation globalement parallèle à la surface externe de la vitre ;
- la rampe comporte une face externe qui masque le logement en affleurant la surface externe de la vitre lorsque la rampe est en position escamotée.

D'autres caractéristiques et avantages apparaîtront au cours de la lecture de la description détaillée qui va suivre pour la compréhension de laquelle on se reportera aux dessins annexés parmi lesquels :
- la figure 1 est une vue éclatée en perspective qui représente un projecteur réalisé selon les enseignements de l'invention qui est équipé d'une rampe escamotable de gicleurs ;
- la figure 2 est une vue de face qui représente la vitre de protection du projecteur de la figure 1 ;
- la figure 3 est une vue de profil du projecteur de la figure 1 qui représente la rampe de gicleurs en position déployée ;
- la figure 4 est une vue «écorchée» du projecteur de la figure 1 ;
- la figure 5 est une vue en élévation qui représente la rampe de gicleurs en position escamotée ;
- la figure 6 est une vue similaire à celle de la figure 5 dans laquelle la rampe de gicleurs est représentée en position déployée ;
- la figure 7 est une vue en perspective qui représente un autre mode de réalisation du projecteur selon les enseignements de l'invention
- la figure 8 est une vue en perspective qui représente encore un autre mode de réalisation du projecteur selon les enseignements de l'invention.

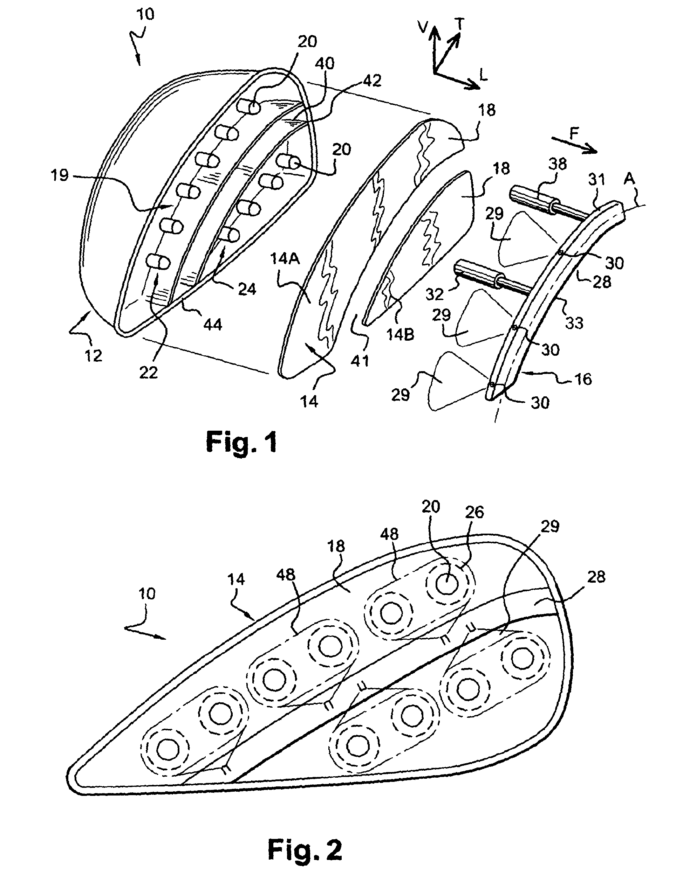

Dans la suite de la description, on adoptera à titre non limitatif une orientation longitudinale, verticale et transversale indiquée par le trièdre "L","V","T" de la figure 1. La direction longitudinale est orientée d'arrière en avant selon la direction indiquée par la flèche "L".

Par la suite, des éléments similaires, analogues ou identiques seront désignés par un même numéro de référence.

On a représenté à la figure 1 un projecteur 10 qui est apte à être monté dans un véhicule automobile, par exemple à l'avant du véhicule. Le projecteur 10 est apte à émettre un faisceau lumineux principal selon une direction globalement longitudinale vers l'avant.

Le projecteur 10 comporte un boîtier 12 et une vitre de protection 14 qui ferme le boîtier 12 de manière étanche. Le projecteur 10 comporte aussi un dispositif de lavage 16 de la surface externe avant 18 de la vitre de protection 14.

La surface externe avant 18 de la vitre de protection 14 est d'orientation globalement verticale transversale dirigée vers l'avant. De façon non limitative, la surface externe 18 de la vitre 14 a une forme légèrement convexe.

Le boîtier 12 renferme un unique ensemble optique 19 qui est apte à émettre un faisceau lumineux principal à travers la vitre de protection 14 selon une direction globale longitudinale orientée vers l'avant.

L'ensemble optique 19 comporte une pluralité de sources lumineuses qui sont ici des diodes électroluminescentes 20 de forte puissance, aussi appelées "LEDs". Les diodes 20 sont ici au nombre de dix et elles sont agencées, à titre d'exemple non limitatif, sur deux rangs transversaux 22, 24 qui sont superposés sensiblement verticalement. Le premier rang supérieur 22 comporte un alignement transversal de six diodes 20 et le deuxième rang inférieur 24 comporte un alignement transversal de quatre diodes 20.

Chaque diode 20 est apte à émettre un pinceau lumineux étroit selon une direction sensiblement longitudinale vers l'avant. Par pinceau lumineux, on entend un faisceau lumineux plus étroit que le faisceau lumineux principal.

Toutes les diodes 20 sont destinées à être allumées simultanément de manière que l'addition des dix pinceaux lumineux forme le faisceau lumineux principal.

Selon une variante non représentée de l'invention, le boîtier 12 renferme plusieurs ensembles optiques. Par exemple le boîtier 12 renferme un premier ensemble optique 19 comportant une pluralité de diodes 20 et un deuxième ensemble optique comportant une unique source lumineuse tel qu'un feu de signalisation ou un clignotant, ou une deuxième pluralité de diodes remplissant une deuxième fonction d'éclairage ou de signalisation.

Comme représenté à la figure 2, chaque diode 20 éclaire de façon très intense une zone limitée 26 de la vitre de protection 14 qui est située en vis-à-vis. La surface externe 18 de la vitre de protection 14 comporte ainsi dix zones éclairées 26 qui associées respectivement à chaque diode 20. Les zones éclairées 26 sont distinctes les unes des autres et elles peuvent être séparées les unes des autres par des zones non éclairées.

Dans la présente description, les zones de la vitre dites « en vis-à-vis » d'une source lumineuse sont les zones éclairées par cette source lumineuse et qui sont disposées sur le trajet des rayons lumineux émis par la source lumineuse et participant à la formation du faisceau lumineux principal émis selon une direction globalement longitudinale vers l'avant.

Le dispositif de lavage 16 doit donc être adapté pour nettoyer plus particulièrement toutes les zones éclairées 26.

Selon les enseignements de l'invention, le dispositif de lavage 16 de la surface externe 18 de la vitre 14 comporte une rampe 28 d'axe d'orientation sensiblement parallèle au plan de la surface externe 18 de la vitre 14. La rampe 28 est ici orientée selon un axe "A" sensiblement transversal.

La rampe 28 porte au moins deux gicleurs 30. Dans l'exemple représenté à la figure 1, la rampe 28 porte cinq gicleurs 30. Chaque gicleur 30 est apte à émettre un jet conique ou cône d'aspersion 29 de liquide de lavage sous pression en direction de la surface externe 18 de la vitre 14. Dans le mode de réalisation représenté à la figure 1, trois gicleurs 30 sont alignés transversalement sur une première face latérale horizontale supérieure 31 de la rampe 28, et les deux autres gicleurs 30, qui ne sont pas visibles aux figures, sont alignés transversalement sous une deuxième face latérale horizontale inférieure opposée 33 de la rampe 28.

La rampe 28 est montée mobile par rapport à la surface externe 18 de la vitre 14 selon une direction de déploiement qui est sensiblement perpendiculaire à la surface externe 18 et qui est indiquée par la flèche "F" de la figure 1. La direction de déploiement a ici une orientation sensiblement longitudinale.

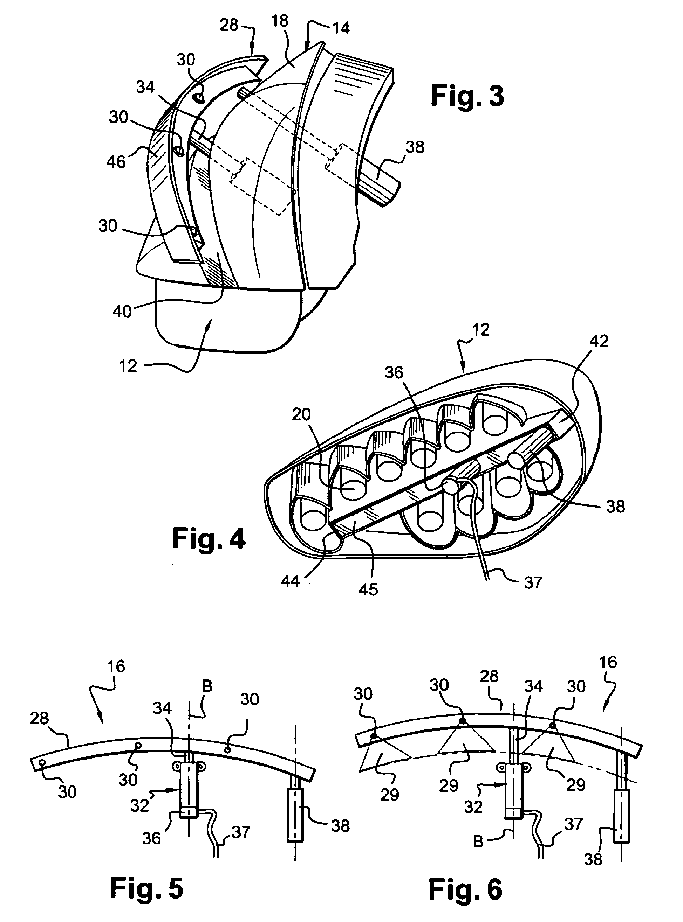

La rampe 28 est ainsi mobile entre une première position arrière escamotée qui est représentée à la figure 5, et une deuxième position avant déployée qui est représentée aux figures 3 et 6, et dans laquelle la rampe 28 fait saillie longitudinalement en avant de la surface externe 18 de la vitre de protection 14.

A cet effet le dispositif de lavage 16 comporte un vérin 32 hydraulique comme représenté aux figures 5 et 6, comportant une tige avant 34 qui est montée coulissante dans une base arrière 36 selon un axe "B" d'orientation longitudinale. Une extrémité libre avant de la tige 34 du vérin 32 est fixée à la rampe 28, sensiblement au milieu de la rampe 28. La base arrière 36 du vérin 32 est solidaire du boîtier 12, comme illustré à la figure 4.

La base arrière 36 du vérin 32 comporte une conduite 37 à raccorder à un circuit de distribution de liquide de lavage sous pression. Cette conduite d'admission 37 alimente chacun des gicleurs 30 en liquide de lavage sous pression.

Avantageusement et de manière connue, le déploiement du vérin 32 est apte à être déclenché par le passage de l'eau de lavage sous pression par l'intermédiaire de la conduite d'admission 37.

De plus, le dispositif de lavage 16 comporte aussi un axe de guidage 38 qui est parallèle à l'axe "B" du vérin 32 et qui est agencé à une extrémité transversale de la rampe 28. L'axe de guidage 38 coopère avec le boîtier 12 pendant la course de déploiement de la rampe 28 pour guider la rampe 28 en déplacement. Ainsi la rampe 28 est reliée au boîtier 12 par deux points de fixation, ce qui rend la structure du dispositif de lavage 16 plus solide, par exemple l'axe de guidage 38 diminue le risque que la tige coulissante 34 du vérin 32 ne soit tordue lorsque la rampe 28 est en position déployée.

Dans sa position escamotée, la rampe 28 est reçue dans un logement 40 de forme complémentaire de celle de la rampe 28. Le logement 40 est ici agencé dans le boîtier 12 verticalement entre les deux rangs 22, 24 de diodes 20.

Le logement 40 débouche plus particulièrement vers l'avant dans la surface externe 18 de la vitre de protection 14. Un jour 41 de passage de la rampe 28 est donc ménagé dans la vitre de protection 14 de manière à permettre le déploiement de la rampe 28.

Le logement 40 traverse ici transversalement le boîtier 12 d'un bord latéral 42 du boîtier 12 à l'autre bord 44. Le jour de passage 41 traverse donc aussi la vitre de protection 14 de part en part, divisant ainsi la surface externe 18 de la vitre de protection 14 en deux parties distinctes. Comme illustré à la figure 1, la vitre de protection 14 est ici réalisé en deux parties distinctes supérieure 14A et inférieure 14B qui sont agencées verticalement de part et d'autre du logement 44 et du jour 41.

Par ailleurs, le logement 40 est étanche de manière à empêcher du liquide ou des impuretés de pénétrer à l'intérieur du boîtier 12.

Comme représenté à la figure 4, le fond vertical transversal arrière 45 du logement 40 comporte des orifices pour permettre le passage de manière étanche du vérin 32 et de l'axe de guidage 38.

Dans l'exemple représenté à la figure 1, le logement 40 est venu de matière avec le boîtier 12. Le logement 40 est donc distinct de la vitre 14.

Selon une variante non représentée de l'invention, le fond 45 du logement 40 est venu de matière avec la vitre de protection 14. La vitre de protection 14 est alors réalisée en une unique pièce. Cependant, la surface externe 18 de la vitre 14 est toujours divisée en deux parties qui sont agencées de part et d'autre du logement 40.

Avantageusement, en position escamotée de la rampe 28, la face externe verticale transversale avant 46 de la rampe 28 masque le logement 40 en affleurant la surface externe 18 de la vitre de protection 14. Le masquage du logement 40 par la face externe avant 46 de la rampe 28 permet avantageusement d'empêcher des impuretés de s'accumuler dans le logement 40 lorsque la rampe 28 est en position escamotée.

Dans sa position déployée, la rampe 28 fait saillie vers l'avant par rapport à la surface externe 18 de la vitre de protection 14 de manière que le cône d'aspersion 29 de chaque gicleur 30 soit apte à asperger une portion arrosée 48 associée de la surface externe 18 de la vitre 14. Chaque portion arrosée 48 est représentée en traits mixtes à la figure 2.

Selon les enseignements de l'invention, la course de déploiement de la rampe 28 est telle que la portion arrosée 48 englobe au moins une zone éclairée 26 de la surface externe 18 de la vitre de protection 14.

Comme illustré à la figure 2, chaque gicleur 30 est ici apte à asperger deux zones éclairées 28, c'est-à-dire que chaque portion arrosée 48 englobe ici deux zones éclairées.

Le cône d'aspersion 29 de chaque gicleur 30 est concentré autour des zones éclairées 26 associées de manière que la pression du liquide de lavage de chaque cône d'aspersion 29 soit assez élevée pour nettoyer chaque zone éclairée 26.

Avantageusement, les zones de la surface externe 18 de la vitre 14 qui ne sont pas éclairées par les diodes 20 sont globalement peu voire pas aspergées directement par le cône d'aspersion de chaque gicleur 30. A cet effet, les portions arrosées 48 sont sensiblement distinctes entre elles.

Le fait que les zones non éclairées dont certaines sont agencées au centre de la surface externe 18 de la vitre 14, ne soient pas lavées n'est pas préjudiciable pour l'obtention du faisceau lumineux principal puisque les pinceaux lumineux émis par les diodes 20 ne passent pas à travers ces zones non éclairées.

Ainsi, de l'eau de lavage n'est pas gaspillée pour nettoyer des zones non indispensables pour permettre la formation du faisceau lumineux principal du projecteur. Chaque gicleur 30 émet ainsi un cône d'aspersion 29 précis et puissant pour nettoyer la surface externe 18 de la vitre14.

On décrit à présent le fonctionnement d'un tel projecteur 10.

Lorsque la rampe 28 est en position escamotée, le logement 40 est masqué par la face externe avant 46. Le masquage du logement 40 par la face externe avant 46 empêche ainsi des saletés de s'accumuler dans le logement 40. Avantageusement, le masquage permet aussi au projecteur 10 d'avoir un aspect extérieur lisse. Cet aspect extérieur lisse est à la fois esthétique et aérodynamique.

Lorsque la surface externe 10 de la vitre 14 doit être nettoyée, de l'eau de lavage sous pression est admise dans la rampe 28 par l'intermédiaire de la conduite d'admission 37. L'admission du liquide de lavage sous pression entraîne le déploiement du vérin 32.

La course de déploiement est telle que la rampe 28 est suffisamment proche de la surface externe 18 de la vitre 14 pour que chaque gicleur 30 émette un cône d'aspersion d'un liquide de lavage sous pression apte à nettoyer les zones éclairées 26 de la surface externe 18 de la vitre 14 comme expliqué précédemment.

Le fait que le logement 40 soit agencé pour déboucher dans la surface externe 18 de la vitre 14 en divisant la surface externe 18 de la vitre 14 en deux parties permet de minimiser la distance entre chaque gicleur 30 et la portion arrosée 48 associée. Toutes les zones éclairées 26 sont ainsi atteintes par un cône d'aspersion 29 ayant une pression suffisante pour enlever des saletés adhérant à la surface externe 18 de la vitre 14.

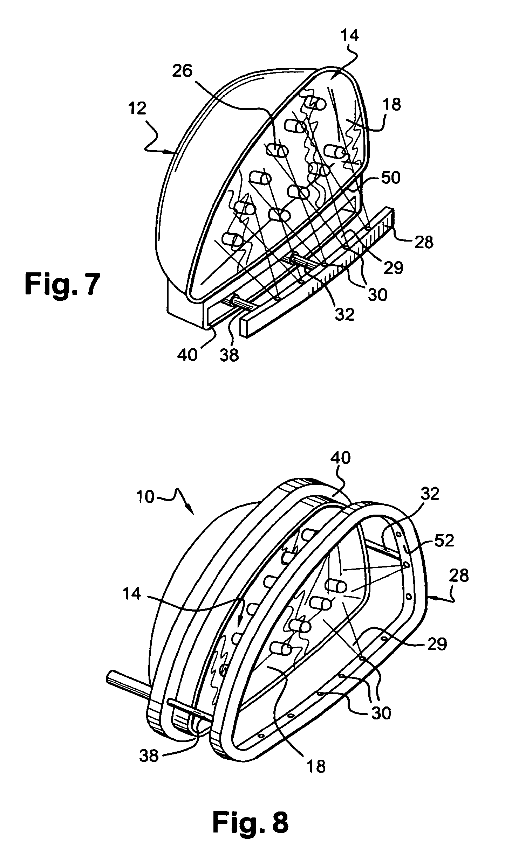

Selon une variante de l'invention qui est représentée à la figure 7, le logement 40 ne débouche pas dans la vitre 14, mais de manière adjacente à au moins un bord périphérique 50 de la vitre 14 qui est ici le bord périphérique 50 transversal inférieur. La vitre 14 est alors réalisé en une unique pièce, et les gicleurs 30 sont tous alignés sur la face latérale 52 de la rampe 28 qui est orientée en direction de la vitre 14.

Selon une autre variante de l'invention qui est représentée à la figure 8, la rampe 28 forme un anneau qui s'étend dans un plan sensiblement parallèle à celui de la surface externe 18 de la vitre 14 de manière à entourer la surface externe 18 de la vitre 14. Le logement 40 a une forme complémentaire qui entoure aussi la vitre de protection 14. Les gicleurs 30 sont alors agencés sur la surface cylindrique interne 52 de la rampe 28 qui est orientée en direction de la vitre 14.

## Revendications

1. Projecteur (10), notamment de véhicule automobile, qui comporte :
- un boîtier (12) renfermant au moins un ensemble optique (19) qui comporte une pluralité de sources lumineuses ;
- une vitre de protection (14) du boîtier (12) globalement verticale transversale orientée vers l'avant comportant une surface avant externe (18) ;
- et un dispositif de lavage (16) de la surface externe (18) de la vitre (14) comportant une rampe (28) portant au moins deux gicleurs (30) aptes à émettre un cône d'aspersion (29) de liquide de lavage ;
du type dans lequel la rampe (28) est montée mobile par rapport à la surface externe (18) de la vitre (14) selon une course de déploiement qui est sensiblement perpendiculaire à la surface externe (18) de la vitre (14) entre :
- une position escamotée dans laquelle la rampe (28) est reçue dans un logement (40) ;
- et une position déployée dans laquelle la rampe (28) fait saillie en avant de la surface externe (18) de la vitre (14) de manière que le cône d'aspersion (29) de chaque gicleur (30) soit apte à arroser une portion (48) associée de la surface externe (18) de la vitre (14),
**caractérisé en ce que** l'ensemble optique, est équipé d'une pluralité de diodes électroluminescentes (20), **en ce qu'**il est apte à émettre une pluralité de pinceaux lumineux intenses et étroits définissant sur la vitre de protection (14) des zones éclairées (26) distinctes entre elles, et **en ce que** la course de déploiement de la rampe (28) est telle que la portion (48) de surface arrosée par le cône d'aspersion (29) de chaque gicleur (30) englobe au moins une zone éclairée (26) de la surface externe (18) de la vitre (14) en vis-à-vis de chaque source lumineuse (20).

2. Projecteur (10) selon la revendication précédente, **caractérisé en ce que** les portions de surfaces arrosées (48) sont sensiblement distinctes les unes des autres.

3. Projecteur (10) selon la revendication précédente, **caractérisé en ce que** le logement (40) est agencé de manière adjacente à au moins un bord périphérique (50) de la surface externe (18) de la vitre (14).

4. Projecteur (10) selon la revendication précédente, **caractérisé en ce que** les gicleurs (30) sont alignés selon une direction perpendiculaire à la course de déploiement sur une face latérale (52) de la rampe (28).

5. Projecteur (10) selon l'une quelconque des revendications 3 ou 4, **caractérisé en ce que** la rampe (28) forme un anneau qui entoure la surface externe (18) de la vitre (14).

6. Projecteur (10) selon l'une quelconque des revendications 1 ou 2, **caractérisé en ce que** le logement (40) est agencé de manière à déboucher dans la surface externe (18) de la vitre (14).

7. Projecteur (10) selon la revendication précédente, **caractérisé en ce que** le fond (45) du logement (40) est réalisé venu de matière avec la vitre (14).

8. Projecteur (10) selon la revendication 6, **caractérisé en ce que** le fond (45) du logement (40) est un élément distinct de la vitre (14).

9. Projecteur (10) selon la revendication précédente, **caractérisé en ce que** le fond (45) du logement (40) est venu de matière avec le boîtier (12).

10. Projecteur (10) selon l'une quelconque des revendications 8 ou 9, **caractérisé en ce que** la vitre (14) est réalisée en deux parties distinctes (14A, 14B) qui sont agencées de part et d'autre du logement (40).

11. Projecteur (10) selon l'une quelconque des revendications 6 à 10, **caractérisé en ce que** le logement (40) est étanche.

12. Projecteur (10) selon l'une quelconque des revendications 6 à 11, **caractérisé en ce que** les gicleurs (30) sont alignés selon une direction perpendiculaire à la course de déploiement sur deux faces latérales (31, 33) de la rampe (28) de manière à asperger des portions (48) de la surface externe (18) de la vitre (14) qui sont réparties de part et d'autre du logement (40).

13. Projecteur selon l'une quelconque des revendications 6 à 12, **caractérisé en ce que** la rampe (28) a un axe principal (A) d'orientation globalement parallèle à la surface externe (18) de la vitre (14).

14. Projecteur (10) selon l'une quelconque des revendications précédentes, **caractérisé en ce que** la rampe (28) comporte une face externe (46) qui masque le logement (40) en affleurant la surface externe (18) de la vitre (14) lorsque la rampe (28) est en position escamotée.

## Claims

1. Headlight (10), in particular of motor vehicle, which comprises:
- a case (12) containing at least one optical assembly (19) with a plurality of light sources;
- a protecting glass (14) of the generally vertical transversal case (12) directed towards the front comprising an outer front surface (18);
- and a washing device (16) of the outer surface (18) of the glass (14) comprising a ramp (28) carrying at least two washing jets (30) capable of emitting a washing liquid spraying cone (29); of the type in which the ramp (28) is assembled, relative to the outer surface (18) of the glass (14), displaceably along a deployment path, which is substantially perpendicular to the outer surface (18) of the glass (14) between:
- a retracted position in which the ramp (28) is received in a housing (40);
- and a deployed position in which the ramp (28) is projected in front of the outer surface (18) of the glass (14) so that the spraying cone (29) of each washing jet (30) is capable of watering a portion (48) associated to the outer surface (18) of the glass (14),
**characterized in that** the optical assembly has a plurality of electroluminescent diodes (20), **in that** it is capable of emitting a plurality of intense and narrow light beams onto the protecting glass (14) of the lighted zones (26) distinct from one another and **in that** the deployment path of the ramp (28) is such that the portion (48) of surface watered by the spraying cone (29) of each washing jet (30) includes at least one associated lighted zone (26) of the outer surface (18) of the glass (14) with respect to each light source (20).

2. Headlight (10) according to the preceding claim, **characterized in that** the portions of watered surfaces (48) are substantially distinct from one another.

3. Headlight (10) according to the preceding claim, **characterized in that** the housing (40) is arranged in an adjacent way on at least one peripheral edge (50) of the outer surface (18) of the glass (14).

4. Headlight (10) according to the preceding claim, **characterized in that** the washing jets (30) are aligned in a direction perpendicular to the deployment path on a side face (52) of the ramp (28).

5. Headlight (10) according to either of claims 3 or 4, **characterized in that** the ramp (28) forms a ring, which surrounds the outer surface (18) of the glass (14).

6. Headlight (10) according to anyone of the claims 1 or 2, **characterized in that** the housing (40) is arranged so as to open out in the outer surface (18) of the glass (14).

7. Headlight (10) according to the preceding claim, **characterized in that** the bottom (45) of the housing (40) is formed integrally with the glass (14).

8. Headlight (10) according to claim 6, **characterized in that** the bottom (45) of housing (40) is an element, which is distinct from the glass (14).

9. Headlight (10) according to the preceding claim, **characterized in that** the bottom (45) of the housing (40) is formed integrally with the case (12).

10. Headlight (10) according to any from the claims 8 or 9, **characterized in that the** glass (14) is formed as two distinct parts (14A, 14B), which are arranged on either side of the housing (40).

11. Headlight (10) according to anyone of claims 6 to 10, **characterized in that** housing (40) is sealed.

12. Headlight (10) according to anyone of claims 6 to 11, **characterized in that the** washing jets (30) are aligned in a direction perpendicular to the deployment path on two side faces (31, 33) of the ramp (28), so as to water portions (48) of the outer surface (18) of the glass (14), which are distributed on either side of the housing (40).

13. Headlight according to anyone of claims 6 to 12, **characterized in that** the ramp (28) has a principal axis (A) of orientation generally parallel with the outer surface (18) of the glass (14).

14. Headlight (10) according to anyone of the preceding claims, **characterized in that** the ramp (28) comprises an outer face (46), which masks the housing (40) by lying flush with the outer surface (18) of the glass (14) when the ramp (28) is in the retracted position.

## Patentansprüche

1. Scheinwerfer (10), insbesondere für Kraftfahrzeuge, mit:
- einem Gehäuse (12), das wenigstens eine optische Einheit (19) umschließt, die mehrere Lichtquellen umfasst;
- einer allgemein vertikalen, quer verlaufenden, nach vorne gerichteten Schutzscheibe (14) des Gehäuses (12), die eine vordere Außenseite (18) umfasst;
- und einer Waschvorrichtung (16) zum Reinigen der Außenseite (18) der Scheibe (14), die eine Rampe (28) umfasst, die wenigstens zwei Spritzdüsen (30) trägt, welche einen Sprühkegel (29) mit Reinigungsflüssigkeit abzugeben vermögen; des Typs, bei dem die Rampe (28) gemäß einem im Wesentlichen zur Außenseite (18) der Scheibe (14) lotrechten Ausfahrweg bezüglich der Außenseite (18) der Scheibe (14) beweglich montiert ist zwischen:
- einer eingefahrenen Position, in der die Rampe (28) in einer Aufnahme (40) lagert;
- und einer ausgefahrenen Position, in der die Rampe (28) vor der Außenseite (18) der Scheibe (14) derart vorsteht, dass der Sprühkegel (29) jeder Spritzdüse (30) einen der Außenseite (18) der Scheibe (14) zugehörigen Abschnitt (48) zu besprühen vermag,
**dadurch gekennzeichnet, dass** die optische Einheit mit einer Vielzahl von Leuchtdioden (20) versehen ist, dass sie eine Vielzahl intensiver, schmaler Strahlenbüschel auszusenden vermag, die auf der Schutzscheibe (14) voneinander getrennte beleuchtete Bereiche (26) bilden, und dass der Ausfahrweg der Rampe (28) so ist, dass der Abschnitt (48) der durch den Sprühkegel (29) einer jeden Sprühdüse (30) besprühten Fläche wenigstens einen beleuchteten Bereich (26) der Außenseite (18) der Scheibe (14) gegenüber der Lichtquelle (20) umfasst.

2. Scheinwerfer (10) nach dem vorhergehende Anspruch,
**dadurch gekennzeichnet, dass** die besprühten Flächenabschnitte (48) im Wesentlichen voneinander getrennt sind.

3. Scheinwerfer (10) nach dem vorhergehenden Anspruch,
**dadurch gekennzeichnet, dass** die Aufnahme (40) wenigstens einem Umfangsrand (50) der Außenseite (18) der Scheibe (14) benachbart ausgebildet ist.

4. Scheinwerfer (10) nach dem vorhergehenden Anspruch,
**dadurch gekennzeichnet, dass** die Sprühdüsen (30) quer zum Ausfahrweg auf einer Seitenfläche (52) der Rampe (28) aufgereiht sind.

5. Scheinwerfer (10) nach einem der Ansprüche 3 oder 4,
**dadurch gekennzeichnet, dass** die Rampe (28) einen Ring bildet, der die Außenseite (18) der Scheibe (14) umgibt.

6. Scheinwerfer (10) nach einem der Ansprüche 1 oder 2,
**dadurch gekennzeichnet, dass** die Aufnahme (40) solchermaßen ausgebildet ist, dass sie in die Außenseite (18) der Scheibe (14) mündet.

7. Scheinwerfer (10) nach dem vorhergehenden Anspruch,
**dadurch gekennzeichnet, dass** der Boden (45) der Aufnahme (40) einstückig mit der Scheibe (14) ausgebildet ist.

8. Scheinwerfer (10) nach Anspruch 6,
**dadurch gekennzeichnet, dass** der Boden (45) der Aufnahme (40) ein von der Scheibe (14) separates Element ist.

9. Scheinwerfer (10) nach dem vorhergehenden Anspruch,
**dadurch gekennzeichnet, dass** der Boden (45) der Aufnahme (40) einstückig mit dem Gehäuse (12) ausgebildet ist.

10. Scheinwerfer (10) nach einem der Ansprüche 8 oder 9,
**dadurch gekennzeichnet, dass** die Scheibe (14) als zwei getrennte Teilen (14A, 14B) ausgeführt ist, die beidseits der Aufnahme (40) angeordnet sind.

11. Scheinwerfer (10) nach einem der Ansprüche 6 bis 10,
**dadurch gekennzeichnet, dass** die Aufnahme (40) dicht ist.

12. Scheinwerfer (10) nach einem der Ansprüche 6 bis 11,
**dadurch gekennzeichnet, dass** die Sprühdüsen (30) quer zum Ausfahrweg auf zwei Seitenflächen (31, 33) der Rampe (28) so aufgereiht sind, dass Abschnitte (48) der Außenseite (18) der Scheibe (14) besprüht werden, die beiderseits der Aufnahme verteilt sind.

13. Scheinwerfer (10) nach einem der Ansprüche 6 bis 12,
**dadurch gekennzeichnet, dass** die Rampe (28) eine Hauptachse (A) mit einer zur Außenseite (18) der Scheibe (14) allgemein parallelen Ausrichtung hat.

14. Scheinwerfer (10) nach einem der vorhergehenden Ansprüche,
**dadurch gekennzeichnet, dass** die Rampe (28) eine Außenseite (46) aufweist, welche die Aufnahme (40) verdeckt, indem sie mit der Außenseite (18) der Scheibe (14) bündig ist, wenn sich die Rampe (28) in der eingefahrenen Position befindet.
